# EUROPEAN PATENT APPLICATION

(11) **EP 1 050 631 A2**
(43) Date of publication of application: **08.11.2000**
(21) Application number: 00109427.5
(22) Date of filing: 03.05.2000
(51) Int. Cl.: E03D 1/14, E03D 1/34

(54) **A control device for a toilet flush valve**

(30) Priority: 03.05.1999 DK 59699
(71) Applicant: Sylvester, Lisbeth Pedersen, 9240 Nibe (DK); Karstensen, Nils Uwe, 9240 Nibe (DK)
(72) Inventor: Sylvester, Lisbeth Pedersen, 9240 Nibe (DK); Karstensen, Nils Uwe, 9240 Nibe (DK)
(74) Representative: Nielsen, Leif L.

(57) **Abstract**

A device control device for a flush valve in a toilet flush tank comprises two identical parts (1) each forming a vessel with an open cavity (9) with sides (5,7) and bottom (3). The device may act as a weight when the opening of the cavity (9) faces upward, whereby water may be contained in the cavity (9), or may act as a float when the opening of the cavity (9) faces downward, thereby trapping air in the cavity (9).

Hereby is provided a device for retro-fitting a water saving control device in existing toilets with different control mechanisms.

## Description

### State of the Art

The invention concerns a control device for a flush valve in a toilet flush tank, comprising two identical parts and fastening means for attaching the device to a vertical control rod connected to the flush valve in the toilet flush tank or to parts of the control mechanism of the flush valve.

Such a control device for reducing water consumption is disclosed in DE-B1-22 27 225. By the described flushing arrangement, the toilet is flushed by pulling a knob at the top of the control rod or by pushing a laterally projecting lever arm, whereby a stopper or similar means at the bottom of the control rod uncovers the flushing opening in the tank. The stopper is held in its closed position by the pressure from the water in the tank when it is filled. Since the rod with stopper is kept floating during flushing by a buoyant tube part attached to the control rod, the tank discharges all of its content before the stopper reaches the flushing opening again. According to this disclosure, the device has the purpose of acting as a weight on the control rod for overcoming the buoyant action of the tube-shaped float and thereby shortening the time of flushing, thus saving water. The disclosed device is mounted around the tube-shaped part of the control rod and is assembled by a rubber ring holding the two identical parts together. Projections at the inner periphery of the part engage notches in the tube-shaped part, thereby keeping the device in position on the control rod. The draw-back of this device is that it only may be used in one specific kind of toilet flushing mechanisms, where additional weight is needed for providing the reduced discharge of water. The device cannot be attached to different control rods or the like without notches, thus limiting its field of application.

In publicly available DK patent application 0315/94 L there is mentioned a water saving device in the form of a body acting as float on the stopper in the bottom. In this case the floating body follows the water level in the toilet tank, but due to its weight it keeps the otherwise floating stopper submerged at a distance below the water level. When the water sinks in the tank, the stopper reaches the outlet of the tank while an amount of water between the stopper and the body is still in the tank. Thus a complete emptying of the tank is avoided, and water is saved. The prior art described above and elsewhere all show solutions directed to specific control mechanisms and cannot be utilised in different types of toilets.

### Explanation of the Invention

The control device according to the invention is peculiar in that the identical parts each are shaped as a vessel provided with a bottom with adjoining side walls.

When placed on the control rod with the hollow of the vessel facing upwards, the device contains water when lifted up over the water level when pulling the rod. Thereby the device acts as a weight for pushing down the flushing valve, thereby saving water by closing the flushing opening before the tank is empty. If the device is placed upside down, i.e. with the bottom facing upwards, the device may act as a float because of the air trapped inside the vessel. Thus the device according to the invention may act both as a float and a weight depending on the need of the flushing arrangement in question, and by the invention it is possible to modify different kinds of toilet mechanisms to save flushing water.

According to an embodiment of the invention, the identical parts have apertures separate of the vessel, and the fastening means comprise a bracket designed to engage an aperture in each part and to be fastened to the control rod so as to attach the parts to the control rod. The bracket provides attachment to the control rod while keeping the two parts at a distance from the rod in cases where there is not sufficient space close to the rod.

In a further embodiment of the invention, each part is provided with an external convex projection and with a hollow at a side facing the other part, and where the projection and the hollow are shaped and arranged to complement each other and to engage each other when the parts are assembled around the control rod. The fastening means for the device may thereby be integrated in the two identical parts, thereby simplifying manufacture and assembly of the device. If the control rod or parts of it have outer shape and dimension that fits the interior shape of the assembled parts, no further fastening means are needed for attachment.

In order to accommodate to different and smaller dimensions of control rods, an embodiment of the invention is peculiar in that the parts are designed to form a central opening for accommodating the control rod in assembled state, and where the fastening means comprise an elastic element designed to fit in the central opening while being squeezed around the control rod by the assembled parts. The elastic element thereby creates a press-fit around the control rod when the parts are assembled around the element. Thus a sufficiently secure attachment of the device on the rod is achieved.

In order to let the hollow inside parts of the device be filled up with water, e.g. as to let the device act as a temporary weight or temporary float, each part has one or more perforations in or at the bottom. Through the perforations water or air may slowly enter or get out of the hollow of the parts of the device.

### The Drawing

Examples of embodiments of the invention are to be described in more detail in the following, where
- Fig. 1: shows a view from above of a part of a device according to the invention,
- Fig. 2 and 3: show sections along the line A-A and B-B, respectively, on Fig. 1,
- Fig. 4: is a side view of the part as seen from below on Fig. 1,
- Fig. 5: is a perspective view of a first application of the device according to the invention,
- Fig. 6: is a perspective view of a second application of the device according to the invention during assembling of the device,
- Fig. 7 and 8: show a view from above and in section along line C-C on Fig. 7, respectively, of the application shown in Fig. 6,
- Fig. 9: shows a first configuration of the device according to the invention with assembling brackets for holding the parts together,
- Fig. 10: shows an application of the device according to the invention with the parts assembled without brackets, and
- Fig. 11: shows a second configuration of assembling the device with a bracket.

### Embodiments of the Invention

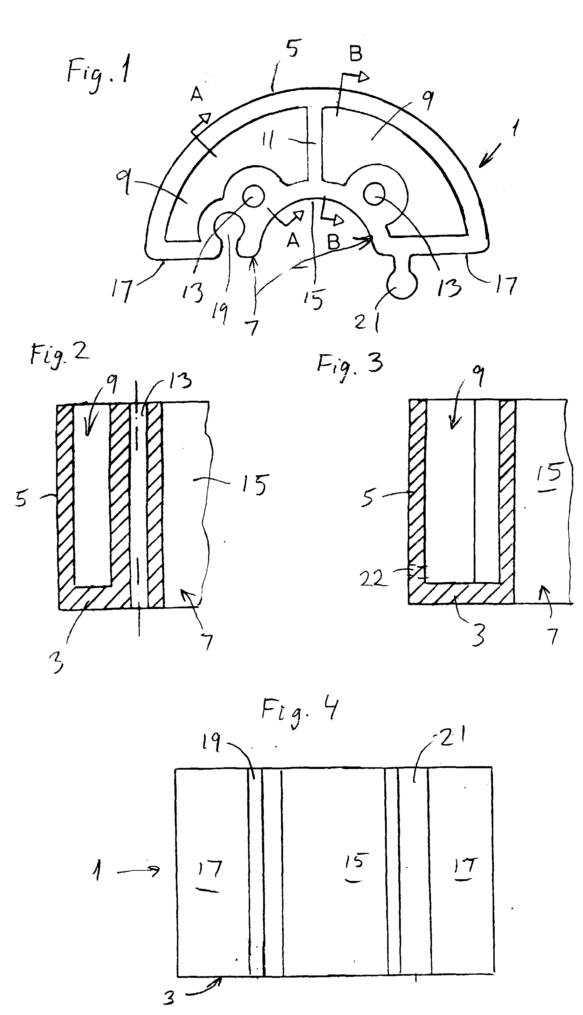

A preferred embodiment of one of two parts making up the essential feature of the device according to the invention is shown in Figs. 1 - 4. The pad 1 is shaped as a vessel with a bottom 3, an outer, semi-cylindric side 5, and an inner profiled side 7. The hollow 9 of the vessel is divided into two chambers by a wall 11 for reinforcement. At the wall of the inner side 7 there is provided separate through-going holes 13, the purpose of which will be explained later. A central semi-cylindric concave section 15 is provided at the inner side 7 for accommodating a part of a control rod for a flush valve. Two plane sections 17 extend at each side of the section 15, and the sections 17 are provided with a groove 19 and a projection 21, both extending along the whole height of the part 1, and having complementing cross-section for engaging similar features on an opposite, identical part 1. In some cases perforations may be needed for slowly filling the cavity 9 with water in the shape of small holes 22 close to the bottom 3.

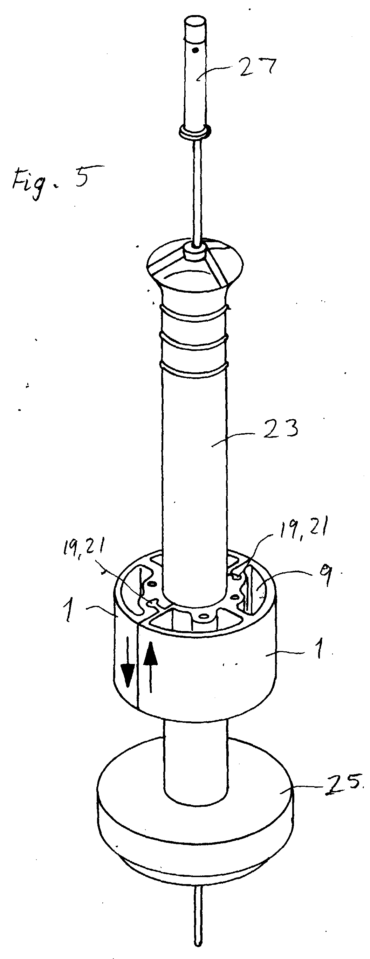

In the simplest application as shown on Fig. 5, the device according to the invention is constituted by two identical parts 1 where grooves 19 and projections 21 engage each other, thereby holding the parts 1 together by the friction caused by the tight fit of the features 19,21. In the application shown the control rod 23, which is tube-shaped, has a dimension corresponding to the section 15 so that the parts may readily fit around the control rod 23. In Fig. 5 the device is turned with the opening to the hollow 9 facing upwards so that it may be filled with water and thereby act as a weight to counter the action of the float which is integrated with the flush valve 25. After pulling the knob 27 at the top of the rod 23, the device will force the valve 25 down rather quickly and thereby cause closing of the flushing opening (not shown) before the tank is empty, thereby saving water.

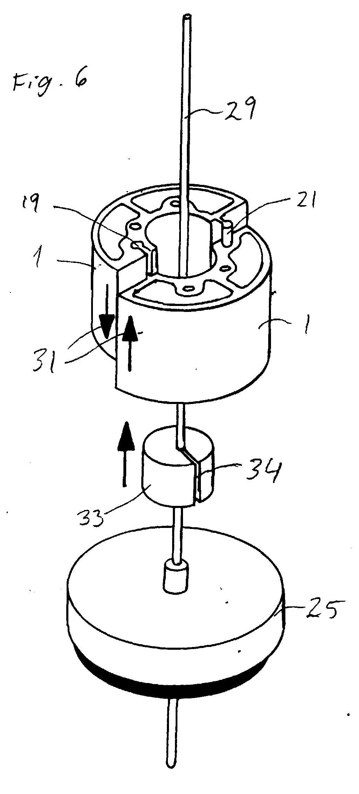

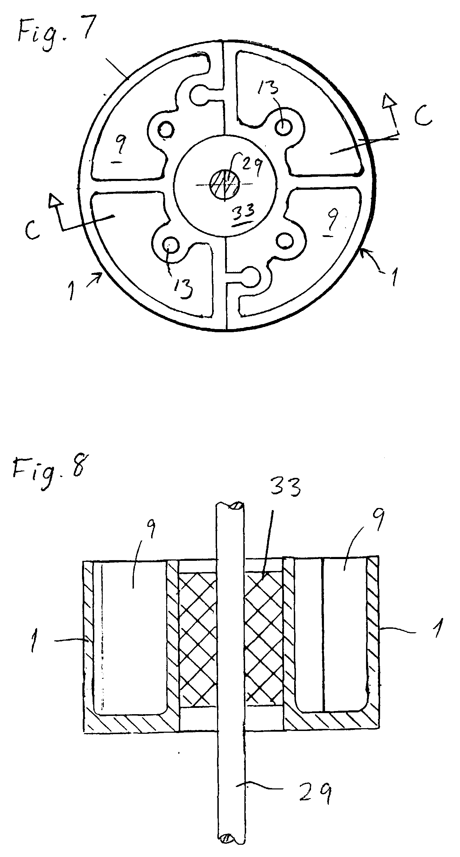

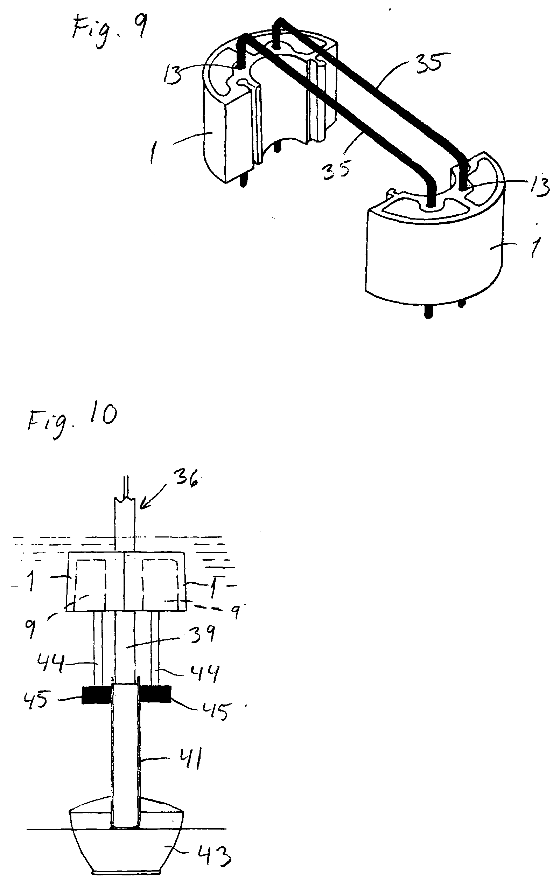

In Fig. 6 is shown a second application of the same parts 1 as in Fig. 5, but with a thinner control rod 29. In this Figure the device is under assembly, and arrows 31 show the mutual movement of the parts 1 during assembling. An elastic element 33 is provided for establishing a press-fit between the rod 29 and the parts 1, the element 33 having a slit 34 for fitting to an existing rod 29 in a toilet. Figs. 7 and 8 show this application in the assembled state.

In order that the device according to the invention may be used in toilets of other design, the parts 1 may be held together and fitted by means of brackets 35 that are pressed through the holes 13 as shown on Fig. 9.

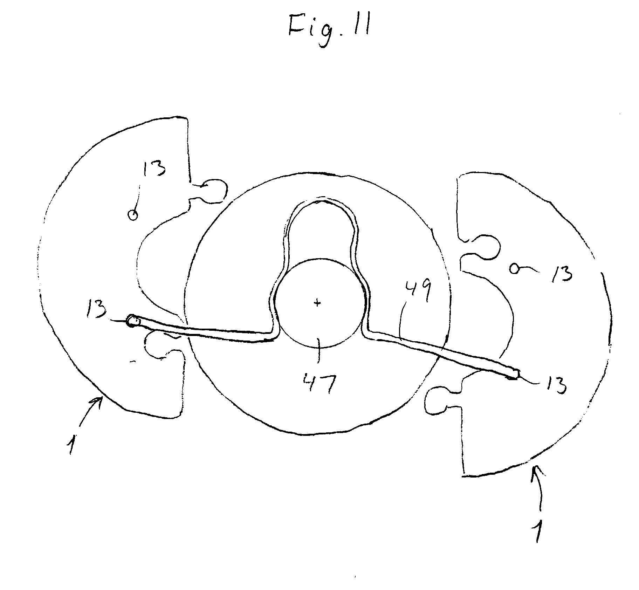

Another application is shown on Fig. 10, where the parts 1 are fastened with the opening facing downwards around a control rod 36 constituted by two parts 39,41, where the first part 39 is directly connected to a not shown knob and the second part 41 is provided with a combined float and flushing valve stopper 43 at the lower end, while the parts 39,41 are interconnected so that the first part may pull the second part 41 up while allowing the second part 41 to telescope along the outer side of the first part 39 when the float 43 rises to the surface of the water afier being pulled up. The holes 13 in the parts 1 are fitted with rods 44 so long that they protrude a certain distance below the lower edge of the parts 1, and their free ends are fitted with rubber elements 45 for abutment of the float 43. Normally, the float/stopper 43 rises to the water surface, but the device according to the invention checks the float/stopper 43 at the level of the rubber elements 45, while the parts 1 float at the water surface because of the trapped air inside the cavities 9. When the water level sinks as the tank is emptied, the stopper 43 reaches the flushing opening in the bottom of the tank before the tank is empty, thereby stopping the flushing and saving water.

In a second configuration of the invention as shown on Fig. 11, the parts 1 are attached to a control rod 47 or another part of the control mechanism by means of a bracket 49 made of elastic material, e.g. spring steel. The bracket 49 clips onto the rod 47 by spring action while its ends engages the holes 13 in the parts 1.

Other combinations of the details of the above embodiments are possible.

## Claims

1. A control device for a flush valve in a toilet flush tank, comprising two identical parts and fastening means for attaching the device to a control rod connected to the flush valve in the toilet flush tank or to parts of the control mechanism of the flush valve, **characterised** in that the identical parts each are shaped as a vessel provided with a bottom with adjoining side walls.

2. A control device according to claim 1, wherein the identical parts have apertures separate of the vessel, and where the fastening means comprise a bracket designed to engage an aperture in each part and to be fastened to the control rod so as to attach the parts to the control rod.

3. A control device according to claim 1 or 2, wherein each part is provided with an external convex projection and with a hollow at a side facing the other part, and where the projection and the hollow are shaped and arranged to complement each other and to engage each other when the parts are assembled around the control rod.

4. A control device according to claim 3, wherein the parts are designed to form a central opening for accommodating the control rod in assembled state, and where the fastening means comprise an elastic element designed to fit in the central opening while being squeezed around the control rod by the assembled parts.

5. A control device according to any preceding claim, wherein each part has one or more perforations in or at the bottom.
